# EUROPEAN PATENT SPECIFICATION

(11) **EP 1 640 840 B1**
(45) Date of publication and mention of the grant of the patent: **24.10.2012**
(21) Application number: 05020100.3
(22) Date of filing: 15.09.2005
(51) Int. Cl.: G05B 19/425

(54) **Robot program production system**
System zur Erzeugung eines Robotersprogrammes
Système de génération d'un programme pour un robot

(30) Priority: 28.09.2004 JP 2004282324
(43) Date of publication of application: 29.03.2006
(73) Proprietor: FANUC CORPORATION, Oshino-mura Minamitsuru-gun Yamanashi 401-0597 (JP)
(72) Inventor: Nagatsuka, Yoshiharu Fanuc Dai3virakaramatsu, Minamitsuru-gun Yamanashi 401-0511 (JP); Kobayashi, Hirohiko, Fujiyoshida-shi Yamanashi 403-0004 (JP)
(74) Representative: Schmidt, Steffen J.

(56) References cited:
- EP-A2- 1 256 860
- US-A1- 2004 172 168

## Description

### BACKGROUND OF THE INVENTION

### 1. Field of the Invention

The present invention relates to a robot program production system. More particularly, the present invention is concerned with a robot program production system that produces a robot program off-line, moves a robot to an actual teaching point corresponding to a teaching point described in the produced robot program, acquires information on the actual teaching point, and corrects the information on the teaching point described in the robot program.

### 2. Description of the Related Art

In currently available robot program production systems, when a robot program produced off-line is applied at a site, the robot program produced off-line is run from the beginning in a single step mode. A robot is halted at a teaching point, before the robot touches a work, and is jogged in order to correct the teaching point at which the robot should touch the work. A teaching point to be taught to a robot refers to a position to which the distal end of a robot is moved. Assuming that the robot is a robot hand, the teaching point is the position to which the distal end of a hand portion is moved. If the robot is a welding robot, the teaching point is the position to which the distal end of a welding rod is moved. Information on a teaching point to be taught to a robot refers to information on the position of the teaching point or the posture of the robot, or refers to relevant data of the teaching point, for example, attribute data.

In the foregoing robot program production systems, according to the related arts, it is hard to find a teaching point that should be corrected and that is described in a robot program produced off-line. In order to find the teaching point, the robot program is run from the beginning. As the teaching point is corrected with a robot in motion, it takes much time to correct the teaching point.

Moreover, when a teaching point that should be corrected is left uncorrected, if a robot program is run, a robot may interfere with a work or with an ambient facility, and the robot, the work, or the ambient facility may be damaged.

Document US 2004/00172168 A1 discloses a taught position modification device for easily correcting, in a short time, positions of taught points in a program prepared by an offline programming system. A workpiece image captured by a visual sensor and an image of a three-dimensional workpiece model having three characteristic points are displayed on a screen. Based on coordinate values of workpiece portions corresponding to the characteristic points which are specified in the workpiece image, the position and orientation of the model in a robot operating space are corrected, and also positions of taught points are corrected. When a tool end of a robot is positioned by jog feed to the operation position on a workpiece after being automatically moved to one of the corrected taught points, the taught point is modified based on the robot operating position detected at that time.

### SUMMARY OF THE INVENTION

Accordingly, the present invention addresses the foregoing problems. An object of the present invention is to provide a robot program without the necessity of taking much time to correct teaching points and without a damage to a robot, a work, or an ambient facility.

To accomplish the object, a robot program production system in accordance with the present invention appends pieces of information on teaching points, which a robot is taught as positions where the robot should touch a work or an ambient facility, to a robot program during off-line production of the robot program. Moreover, the robot program production system determines a path along which the robot is moved from the current position to a teaching point that should be corrected, and moves the robot to the teaching point. Moreover, the robot program production system preserves data items indicating whether all teaching points that should be corrected have been corrected.

To be more specific, a robot program production system in accordance with the present invention is provided in claim 1.

In the robot program production system, correction-needed point identification data with which a teaching point whose position should be corrected is identified is appended to information on each teaching point described in the robot program.
In the robot program production system, the correction-needed point identification data is specified as attribute data.

In the robot program production system, the programming unit includes a means for specifying the positional correction end data to information on a teaching point whose positional correction has been completed.
In the robot program production system, the programming unit includes means for specifying the positional correction end data in the attribute data of the teaching point whose positional correction has bee completed.

In the robot program production system, the robot control unit includes: a means for running the robot program in response to a manipulation performed to initiate the robot program; a means for checking the presence of a teaching point, which satisfies the conditions that positional correction is needed but has not been completed, in response to the manipulation performed to initiate the robot program; and a means for, if the presence of a teaching point satisfying the conditions is recognized, ignoring the initiation and displaying a warning message which signifies the presence of a teaching point that satisfies the conditions.

Owing to the foregoing constituent features, when a robot program is produced off-line, pieces of information on teaching points which a robot is taught as positions where the robot should touch a work are appended to the robot program. Consequently, a teaching point which is taught to the robot and which should be corrected can be readily identified. This obviates the necessity of correcting teaching points while running the robot program from the beginning as conventionally. The time required for correction of teaching points can be shortened. Moreover, a path along which the robot is moved from the current position to a teaching point that should be corrected is determined. The robot is moved to the teaching point along the determined path, whereby the robot can be approached to the teaching point safely without a damage to the robot, a work, or an ambient facility derived from interference. Moreover, all teaching points that should be corrected are checked to see if they have been corrected. Consequently, damage to the robot, the work, or the ambient facility derived from interference attributable to the presence of an uncorrected teaching point can be avoided.

### BRIEF DESCRIPTION OF THE DRAWINGS

Fig. 1 is a block diagram of a robot program production system in accordance with an embodiment of the present invention;
Fig. 2 shows a positional relationship among the robot program production system, a robot, and a work to be treated by the robot;
Fig. 3 is a flowchart describing a procedure to be followed by the robot program production system shown in Fig. 1;
Fig. 4 shows a path of movement to be traced by the distal end of a welding rod included in a robot designed to weld a vehicle body spot by spot;
Fig. 5 shows an example of display of a teaching position and attribute data on a screen of a display included in a robot control unit;
Fig. 6 shows an example of display of a program header and the text of a robot program;
Fig. 7 shows pieces of information on teaching points;
Fig. 8 shows a list of teaching points which are taught to a robot and which should be corrected;
Fig. 9 shows a newly determined path of movement to be traced by the distal end of the welding rod of a robot designed to weld a vehicle body spot by spot; and
Fig. 10 shows a concrete example of a warning screen image.

### DESCRIPTION OF THE PREFERRED EMBODIMENTS

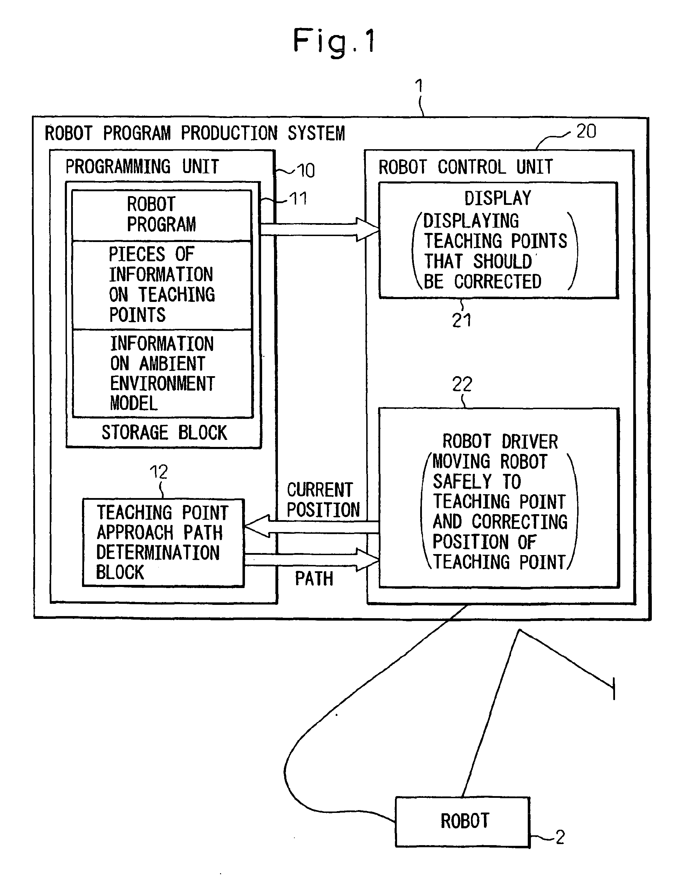

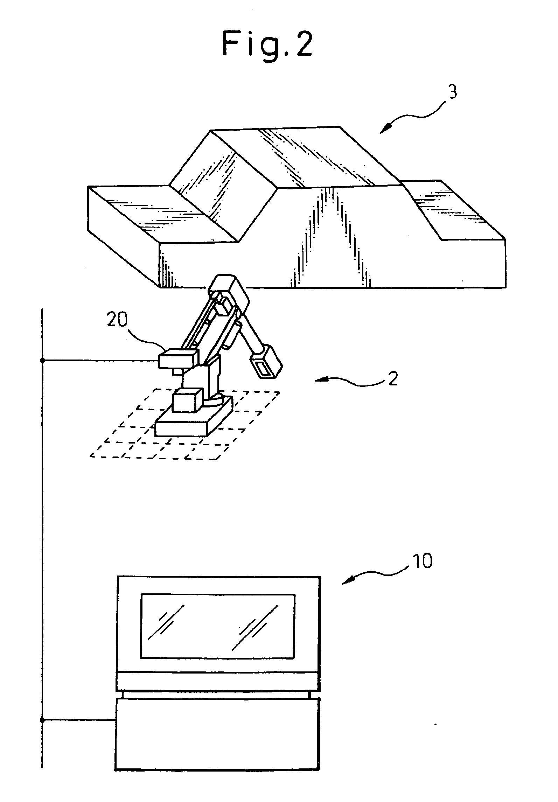

Fig. 1 is a block diagram showing a robot program production system in accordance with an embodiment of the present invention. Fig. 2 shows a positional relationship among a robot program production system 1, a robot 2, and a work 3 to be treated by the robot. The robot program production system 1 shown in Fig. 1 includes: a programming unit 10 that produces a robot program which instructs the robot 2 to perform predetermined treatment, for example, welding, cramping, or carrying; and a robot control unit 20 that controls the action of the robot 2 so that the robot 2 will perform the predetermined treatment. Now, the hardware configurations of the programming unit 10 and the robot control unit 20 will be described below.

The programming unit 10 is realized with, for example, a personal computer, and includes a computer body, an input device including a keyboard and a mouse, an output device including a display unit and a printer, and a communication device (not shown) via which the computer body transmits or receives programs or data to or from external computers over a LAN or the Internet. According to the present embodiment, the robot control unit 20 serves as one of the external computers. The robot control unit 20 includes, in addition to the same components as those of the personal computer, a drive control device for driving or controlling servomotors that actuate the robot 2.

The computer body includes: a CPU; a RAM serving as a main storage device whose area is used as a temporary storage area where a program to be run by the CPU or data is held, or used as a work area by the CPU; a ROM in which resident programs and data are stored; an auxiliary storage device including magnetic disks in which programs or data to be written in the RAM if necessary are stored; and a reader that reads a storage medium M, in which a program or data is stored, such as a flexible disk (FD) or a compact disk (CD). The CPU, RAM, ROM, auxiliary storage device, and reader are interconnected over a bus so that they can communicate with one another. Next, the functional configurations of the programming unit 10 and the robot control unit 20 employed in the present embodiment will described below.

The programming unit 10 shown in Fig. 1 includes a storage block 11 and a teaching point approach path determination block 12. The storage block 11 saves a robot program that instructs the robot 2 to perform a series of actions, pieces of information on teaching points to be taught to the robot 2, and information on the position and three-dimensional shape of an ambient environment model representing the robot 2, a work 3 to be processed by the robot 2, and an obstacle to process performed by the robot 2 (not shown). The robot program is produced off-line in advance. Assuming that the robot is a robot hand, the teaching points to be taught to the robot 2 refer to positions to which the distal end of a hand portion is moved. Assuming that the robot is a welding robot, the teaching points to be taught to the robot 2 refer to positions to which the distal end of a welding rod is moved. Pieces of information on teaching points refer to pieces of information on the positions of the teaching points or the postures of the robot, or refer to data items relevant to the teaching points, for example, attribute data items.

The teaching point approach path determination block 12 determines an approach path, along which the robot 2 is moved from the current position to a teaching point, which should be corrected, without interference, on the basis of the robot program produced in advance and stored in the storage block 11, the pieces of information on teaching points, and information on the ambient environment model.

The robot control unit 20 shown in Fig. 1 includes a display 21 and a robot driver 22. The display 21 is, for example, a CRT or a liquid crystal display. Pieces of information on teaching points which are taught to the robot 2, which should be corrected, and which are sent from the programming unit 11 are displayed on the display 21. The robot driver 22 employed in the present embodiment includes a device for driving or controlling six servomotors incorporated in the robot 2 so as to move the robot 2 (six-shaft rotation). The device is used to drive the shafts of the robot 2 so that the robot 2 will be moved to a teaching point, which is indicated with the angles of rotation of the six shafts, and then halted. The robot control unit 20 controls the action of the robot 2 so as to move the robot 2 to an actual teaching point, acquires information on the teaching point, and corrects information on the teaching point described in the robot program produced off-line in advance by replacing the information with the acquired information. When information on a teaching point described in the robot program differs from information on an actual teaching point, it is attributable to the fact that an error occurs during manufacture of the robot 2 or work 3, that an error in precision occurs during installation of the robot 2 or work 3, or that if the robot 2 is a robot arm, a sag occurs on an arm portion.

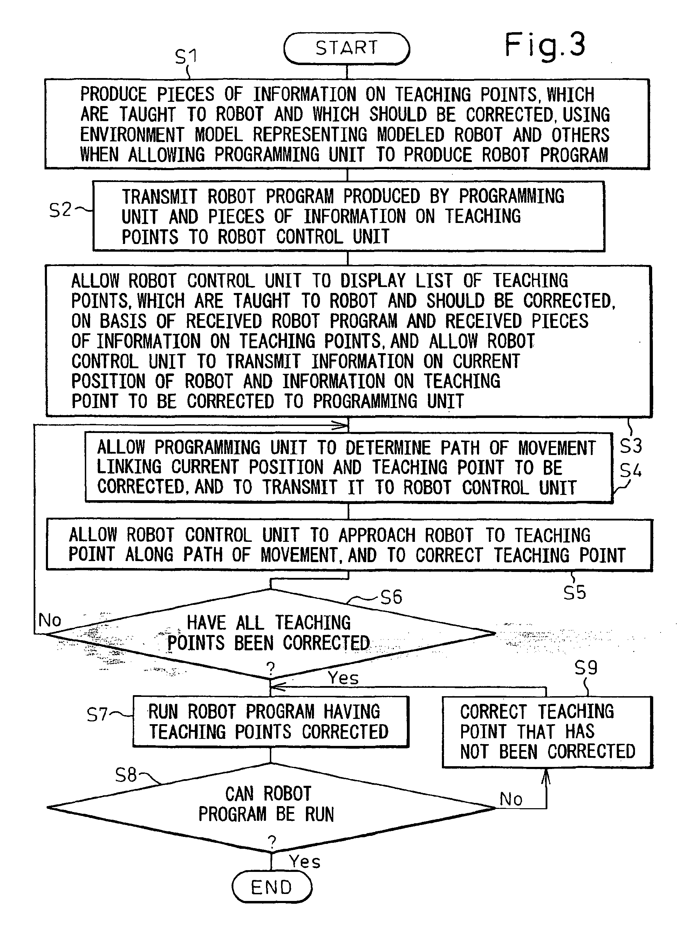

Fig. 3 is a flowchart describing a procedure to be followed by the robot program production system shown in Fig. 1. The robot program production procedure will be described in conjunction with the flowchart of Fig. 3.
At step S1, when the programming unit 10 produces a robot program, information on the position and shape of an ambient environment model representing a robot modeled and stored in advance in the storage block 11, a work to be treated by the robot, and an obstacle to treatment performed by the robot is used to produce pieces of information on teaching points which are taught to a robot and which should be corrected, or in the present embodiment, pieces of information on positions at which the distal end of the welding rod of a robot may touch respective welding spots of a vehicle body.

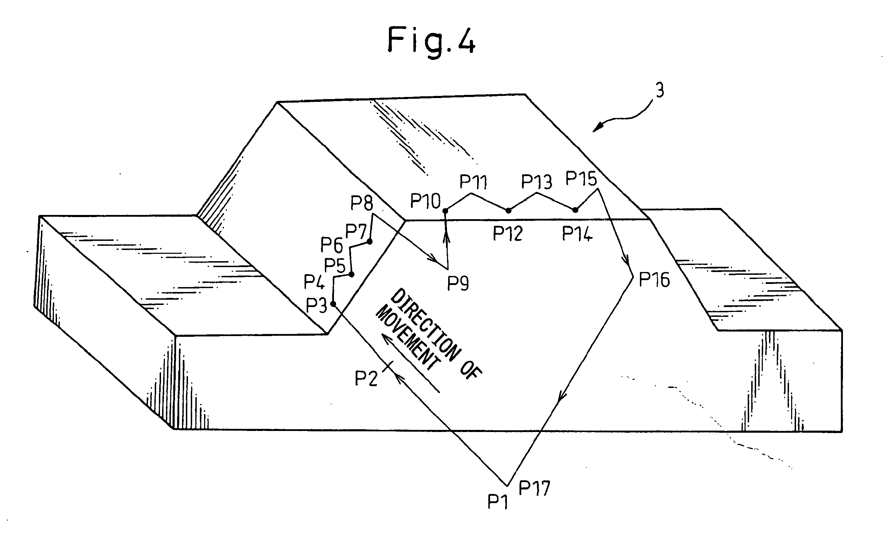

Fig. 4 shows a path of movement to be traced by the distal end of the welding rod of a robot designed to weld a vehicle body spot by spot. In Fig. 4, the position of the distal end of the welding rod included in the robot is shifted from a position P1 through a position P2, etc. to a position P17. Positions at which the distal end of the welding rod of the robot touches a welding spot of the vehicle body 3, which is a work to be treated by the robot 2, are positions P3, P5, P7, P10, P12, and P14.

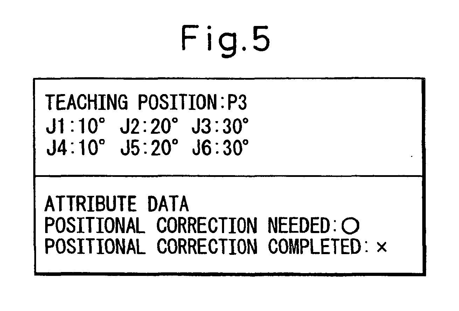

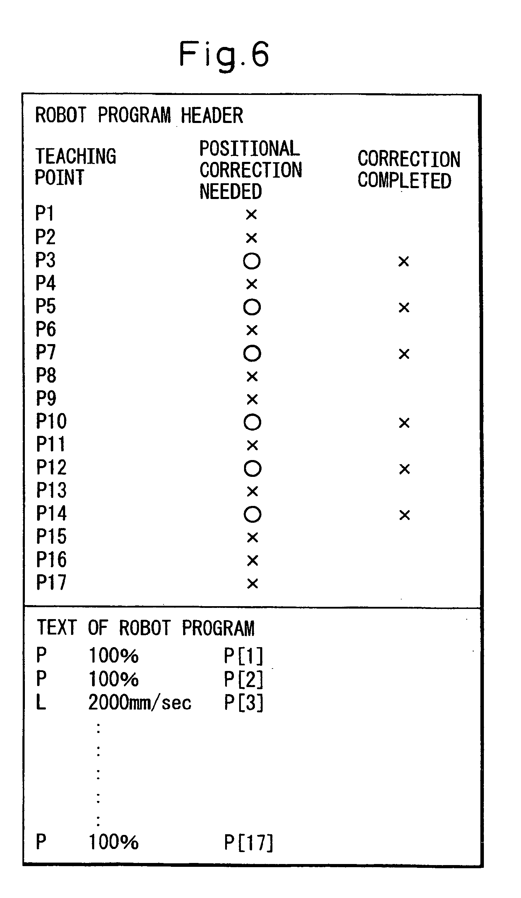

Fig. 5 shows an example of display of a teaching position and attribute data on the screen of the display 21 included in the robot control unit 20. Fig. 6 shows an example of display of a program header and the text of the robot program.

Information on a teaching point which is taught to a robot and which should be corrected because the robot may touch the vehicle body 3 that is a work is recorded as attribute data of the teaching point shown in Fig. 5 or recorded in the robot program header shown in Fig. 6. As is apparent from Fig. 6, a teaching point whose position should be corrected is marked with a circle o and a teaching point whose position need not be corrected is marked with a cross x. A teaching point having been corrected is also marked with x. Pieces of information on teaching points may be recorded in another file. In the text of the robot program, the first line reads an instruction "P 100 % P[1]" signifying that the robot should move to the teaching point P1 at a speed attained by driving the shafts 100 %. The third line reads an instruction "L 2000 mm/sec P[3]" signifying that the robot should rectilinearly move to the teaching point P3 at such a speed that the distal end thereof exhibits a speed of 2000 mm/sec.

At step S2, the robot program produced by the programming unit 10 and the pieces of information on teaching points are transmitted to the robot control unit 20.

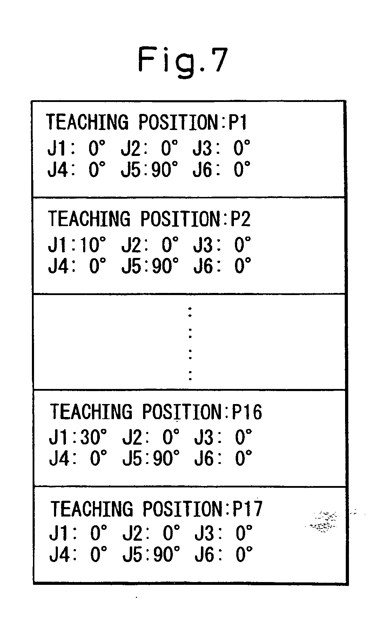

Fig. 7 shows pieces of information on teaching points P1 to P17. In the present embodiment, polar coordinates that define, in a polar coordinate system, the positions of the six shafts attained at each of the teaching points P1 to P17 are stored in the storage block 11 included in the programming unit 10. Information of a teaching point may represent numerical values defined in an orthogonal coordinate system.
At step S3, the robot control unit 20 displays a list of teaching points, which are taught to a robot and should be corrected, on the screen of the display 21 according to the received program and the received pieces of information on the teaching points. An operator views the screen and transmits pieces of information on teaching points, which should be corrected, to the programming unit 10.

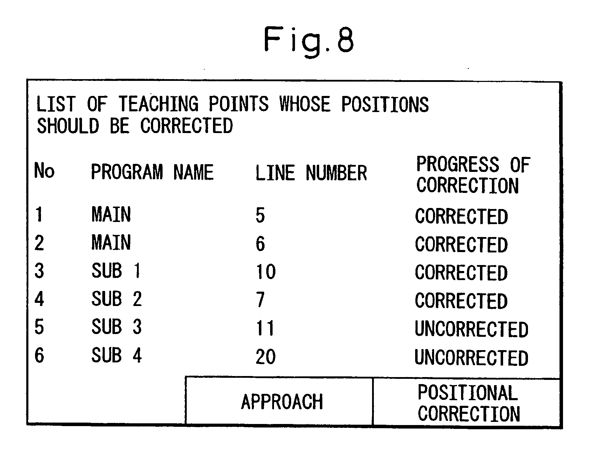

Fig. 8 shows a list of teaching points which are taught to a robot and should be corrected. As can be seen from Fig. 8, six teaching points associated with items 1 to 6 should be corrected. The name of an object program is a main program or a sub program. The number of a line concerned in an object program is specified. Moreover, in the list, "corrected" is specified for an item associated with a teaching point that has been corrected, and "uncorrected" is specified for an item associated with a teaching point that has not been corrected. Moreover, Approach in the right lower part of Fig. 8 indicates a button to be pressed in order to the robot make approach a teaching point. Positional Correction indicates a button to be pressed in order to indicate completion of correction of the position of a teaching point. When the Positional Correction button is pressed, "uncorrected" is changed to "corrected."
At step S3, the robot control unit 20 transmits information on the current position of the robot 2 and information on a teaching point to be corrected this time to the programming unit 10.

At step S4, the programming unit 10 determines a path of movement linking the current position to the teaching point to be corrected.
The determined path is traced using the ambient environment model in order to confirm that the robot will not interfere with the work 3 or any ambient equipment (not shown). If the robot may interfere with something, a bypass is added to the path in order to prevent the interference. When a path is determined, a terminal position of the path is varied depending on whether the robot is moved to a teaching point or halted at a preceding position separated by a predetermined distance from the teaching point.

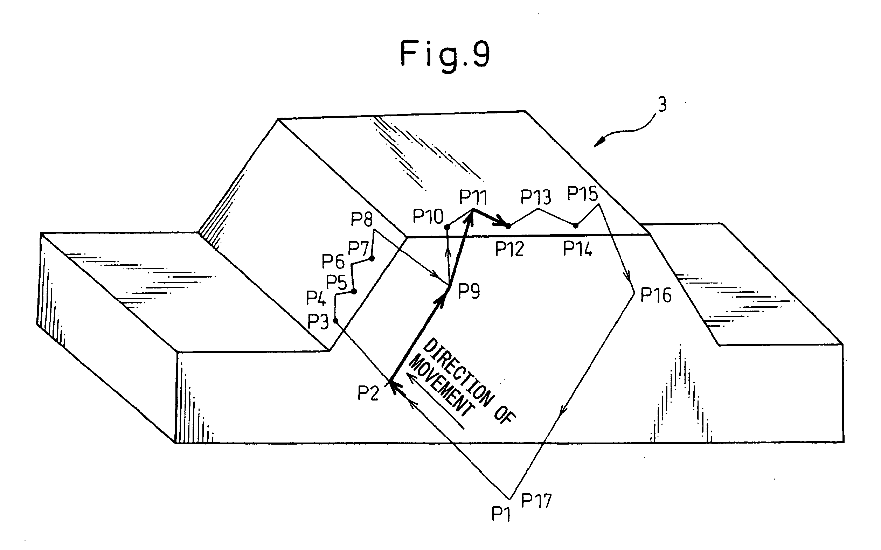

Fig. 9 shows a newly determined path of movement to be traced by the distal end of the welding rod of a robot designed to weld a vehicle body spot by spot. Assume that the current position of the distal end of the welding rod of the robot is a position P2 and a teaching point of a position P12 should be corrected because the distal end may touch the vehicle body at the position. In this case, the distal end is moved from the position P2 through positions P9 and P11 to the position P12.
At step S4, the newly determined path is transmitted to the robot control unit 20.

At step S5, the robot control unit 20 proceeds with teaching point correction while approaching the robot to a teaching point along the path of movement.
After the robot has approached the teaching point, the robot is jogged in order to correct the position thereof. Completion of positional correction is then recorded. Data indicating whether teaching point correction has been completed is recorded for each teaching point.
At step S6, all teaching points are checked to see if they have been corrected. If all the teaching points are recognized to have been corrected, control is passed to step S7. The program having the pieces of information on the teaching points corrected is run at step S7. If at least one teaching point has not been corrected, control is returned to step S4. Step S4 and step S5 are repeatedly executed.

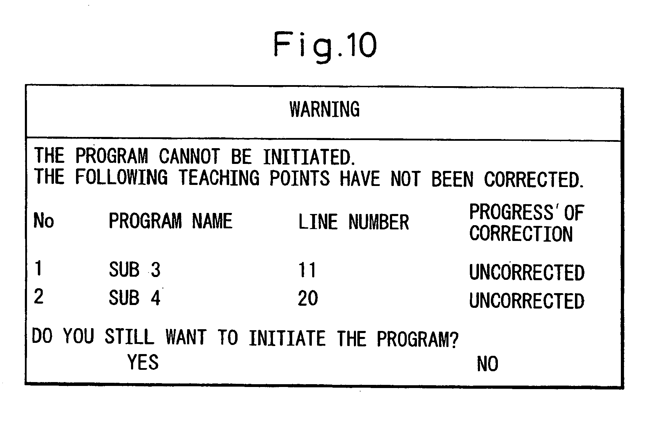

Fig. 10 shows a concrete example of a warning screen image.
After all teaching points have had their positions corrected, the robot program is run. At this time, teaching point correction end data items specified in attribute data items of teaching points that should be corrected are checked to see if a teaching point that should be corrected but has not been corrected is present. If a teaching point that should be corrected but has not been corrected is present, the name of a program having information on the teaching point left uncorrected (sub 3 and sub 4 in Fig. 10), a line number (eleventh line and twentieth line in Fig. 10), and the progress of correction indicating whether correction has been completed or has not been completed (uncompleted in Fig. 10) are, as shown in Fig. 10, presented. Moreover, a warning message saying that a teaching point whose position should be corrected but has not been corrected is present is displayed in order to prompt an operator to verify whether the program should still be activated.
Even when the warning message is displayed, if the program is activated, before the robot moves to a teaching point that has not been corrected, the warning message is redisplayed. If the program is not activated, the warning screen image is changed to a screen image through which teaching points are corrected.
Data items indicating whether respective teaching points should be corrected and data items indicating whether respective corrections have been completed are recorded in a file other than a file containing attribute data items of the respective teaching points or a file containing the robot program header or the text thereof.

At step S8, whether the robot program can be run is verified. If the robot program is recognized to be able to be run, processing is terminated. If the robot program is not recognized to be able to be run, control is passed to step S9. At step S9, teaching points that have not been corrected are corrected and control is returned to step S7.

## Claims

1. A robot program production system comprising a storage block that saves pieces of information on teaching points to be taught to a robot, and information on an ambient environment model representing the robot, a work to be processed by the robot, and obstacles to a process performed by the robot, a programming unit that produces off-line in advance a robot program which instructs the robot to perform a series of actions, and a robot control unit that controls the action of the robot so as to move the robot to a teaching point, wherein:
the programming unit includes a means for determining a path, along which the robot is moved from the current position of the robot to a teaching point, which should be corrected, without interference with the work to be processed and the obstacles to the process, on the basis of the pieces of information on teaching points described in the robot program produced in advance and the information on the ambient environment model, wherein the means for determining a path varies a terminal position of the path depending on whether the robot is moved to a teaching point or halted at a preceding position separated by a predetermined distance from the teaching point; and
the robot control unit includes a means for moving the robot to the teaching point, which should be corrected, along a determined path, and replaces the information on the teaching point, which should be corrected, with information on an actual teaching point acquired after completion of the movement so as to thus correct the information on the teaching point described in the robot program.

2. A robot program production system according to Claim 1, wherein correction-needed point identification data with which a teaching point whose position should be corrected is identified is appended to information on each teaching point described in the robot program.

3. A robot program production system according to Claim 2, wherein the correction-needed point identification data is specified as attribute data of each teaching point.

4. A robot program production system according to any of Claims 1 to 3, wherein the programming unit includes a means for appending positional correction end data to information on each teaching point whose positional correction has been completed.

5. A robot program production system according to Claim 4, wherein the programming unit includes a means for specifying the positional correction end data in attribute data of each teaching point whose positional correction has been completed.

6. A robot program production system according to any of Claims 2 to 5, wherein the robot control unit includes:
a means for running the robot program in response to a manipulation performed to initiate the robot program;
a means for, when the robot program is initiated, checking for the presence of a teaching point satisfying the conditions that positional correction is needed but has not been completed; and
a means for, when the presence of a teaching point satisfying the conditions is recognized, ignoring the initiation and displaying a warning message saying that a teaching point satisfying the conditions is present.

## Patentansprüche

1. System zur Erzeugung von Roboterprogrammen, umfassend einen Speicherblock, der Informationen über Lehrpunkte, die einen Roboter gelehrt werden sollen, und Information über ein Umgebungsmodell, das den Roboter, eine von dem Roboter auszuführende Arbeit und Hindernisse für einen von dem Roboter ausgeführten Prozess darstellt, speichert, eine Programmiereinheit, die offline im Voraus ein Roboterprogramm erzeugt, das den Roboter anweist, eine Reihe von Tätigkeiten auszuführen, und eine Robotersteuereinheit, die die Tätigkeit des Roboters so steuert, dass der Roboter zu einem Lehrpunkt bewegt wird, wobei:
die Programmiereinheit eine Einrichtung zum Festlegen eines Wegs enthält entlang dessen der Roboter auf Basis der Informationen über die Lehrpunkte, die in dem im Voraus erzeugten Roboterprogramm beschrieben sind, und der Information über das Umgebungsmodell ohne Beeinträchtigung der auszuführenden Arbeit und ohne Behinderung des Prozesses durch Hindernisse von der gegenwärtigen Position des Roboters zu einem zu korrigierenden Lehrpunkt bewegt wird, wobei die Einrichtung zum Festlegen eines Wegs eine Endposition des Wegs in Abhängigkeit davon variiert, ob der Roboter zu einem Lehrpunkt bewegt wird oder an einer vorhergehenden Position angehalten wird, die einen vorgegebenen Abstand von dem Lehrpunkt entfernt ist; und
die Robotersteuereinheit eine Einrichtung zum Bewegen des Roboters zu dem zu korrigierenden Lehrpunkt entlang eines festgelegten Wegs enthält und die Information über den zu korrigierenden Lehrpunkt durch Information über einen gegenwärtigen Lehrpunkt, die nach Abschluss der Bewegung erlangt wurde, ersetzt, um so die Information über den in dem Roboterprogramm beschriebenen Lehrpunkt zu korrigieren.

2. System zur Erzeugung von Roboterprogrammen nach Anspruch 1, wobei der Information über jeden in dem Roboterprogramm beschriebenen Lehrpunkt Daten zur Identifizierung von korrekturbedürftigen Punkten hinzugefügt werden, mit denen ein Lehrpunkt identifiziert wird, dessen Position korrigiert werden soll.

3. System zur Erzeugung von Roboterprogrammen nach Anspruch 2, wobei die Daten zur Identifizierung von korrekturbedürftigen Punkten als Attributdaten jedes Lehrpunkts spezifiziert werden.

4. System zur Erzeugung von Roboterprogrammen nach einem der Ansprüche 1 bis 3, wobei die Programmiereinheit eine Einrichtung zum Hinzufügen von Positionskorrekturenddaten zu der Information über jeden Lehrpunkt, dessen Positionskorrektur abgeschlossen ist, enthält.

5. System zur Erzeugung von Roboterprogrammen nach Anspruch 4, wobei die Programmiereinheit eine Einrichtung zum Spezifizieren der Positionskorrekturenddaten in Attributdaten jedes Lehrpunkts, dessen Positionskorrektur abgeschlossen ist, enthält.

6. System zur Erzeugung von Roboterprogrammen nach einem der Ansprüche 2 bis 5, wobei die Robotersteuereinheit enthält:
eine Einrichtung zum Ausführen des Roboterprogramms als Reaktion auf eine zur Initiierung des Roboterprogramms ausgeführte Bedienung;
eine Einrichtung zum, wenn das Roboterprogramm initiiert wird, Überprüfen auf Vorhandensein eines Lehrpunkts, der die Bedingungen erfüllt, dass Positionskorrektur erforderlich ist, aber noch nicht abgeschlossen wurde; und
eine Einrichtung zum, wenn das Vorhandensein eines diese Bedingungen erfüllenden Lehrpunkts erkannt wird, Ignorieren der Initiierung und zum Anzeigen einer Warnmeldung, die auf das Vorhandensein eines Lehrpunkts hinweist, der diese Bedingungen erfüllt.

## Revendications

1. Système de production d'un programme pour robot comprenant un bloc de mémorisation qui sauvegarde une partie des informations sur les points d'enseignement devant être enseignés à un robot, et des informations sur un modèle d'environnement ambiant représentant le robot, un travail devant être effectué par le robot, et des obstacles à un processus réalisé par le robot, une unité de programmation qui produit hors ligne à l'avance un programme de robot qui ordonne au robot de réaliser une série d'actions, et une unité de commande de robot qui commande l'action du robot de façon à déplacer le robot à un point d'enseignement, dans lequel :
l'unité de programmation comprend un moyen destiné à déterminer un trajet, le long duquel le robot est déplacé de la position actuelle du robot à un point d'enseignement qui devrait être corrigé, sans interférence avec le travail devant être effectué ni les obstacles au processus, sur la base de la partie des informations sur les points d'enseignement décrits dans le programme pour robot produit à l'avance et des informations sur le modèle d'environnement ambiant, dans lequel le moyen destiné à déterminer un trajet fait varier une position finale du trajet selon si le robot est déplacé vers un point d'enseignement ou arrêté à une position précédente séparée d'une distance prédéterminée du point d'enseignement ; et
l'unité de commande de robot comprend un moyen destiné à déplacer le robot vers un point d'enseignement qui devrait être corrigé, le long d'un trajet déterminé, et remplace les informations sur le point d'enseignement qui devrait être corrigé, par des informations sur un point d'enseignement actuel obtenu après la fin du déplacement de façon à ainsi corriger les informations sur le point d'enseignement décrit dans le programme pour robot.

2. Système de production d'un programme pour robot selon la revendication 1, dans lequel des données d'identification de point nécessitant une correction avec lesquelles un point d'enseignement dont la position devrait être corrigée est identifié sont annexées aux informations sur chaque point d'enseignement décrit dans le programme pour robot.

3. Système de production d'un programme pour robot selon la revendication 2, dans lequel les données d'identification de point nécessitant une correction sont spécifiées en tant que données d'attribut de chaque point d'enseignement.

4. Système de production d'un programme pour robot selon l'une quelconque des revendications 1 à 3, dans lequel l'unité de programmation comprend un moyen destiné à annexer des données de fin de correction de position aux informations sur chaque point d'enseignement dont la correction de position est terminée.

5. Système de production d'un programme pour robot selon la revendication 4, dans lequel l'unité de programmation comprend un moyen destiné à spécifier les données de fin de correction de position dans les données d'attribut de chaque point d'enseignement dont la correction de position est terminée.

6. Système de production d'un programme pour robot selon l'une quelconque des revendications 2 à 5, dans lequel l'unité de commande de robot comprend :
un moyen destiné à exécuter le programme pour robot en réponse à une manipulation effectuée pour lancer le programme pour robot ;
un moyen pour, lorsque le programme du robot est lancé, contrôler la présence d'un point d'enseignement satisfaisant les conditions selon lesquelles la correction de position est nécessaire mais n'est pas terminée ; et
un moyen pour, lorsque la présence d'un point d'enseignement satisfaisant les conditions est reconnue, ignorer le lancement et l'affichage d'un message d'alerte stipulant qu'un point d'enseignement satisfaisant les conditions est présent.
